Europäisches Patentamt

European Patent Office

Office européen des brevets

(19)

(11) Veröffentlichungsnummer: **0 086 770**
**B1**

(12) **EUROPÄISCHE PATENTSCHRIFT**

(45) Veröffentlichungstag der Patentschrift:
30.08.89

(21) Anmeldenummer: 83890012.4

(22) Anmeldetag: 02.02.83

(51) Int. Cl.⁴: **B 01 D 25/26, B 01 D 25/06**

(54) Filtervorrichtung, insbesondere für Getränke.

(30) Priorität: 11.02.82 AT 506/82

(43) Veröffentlichungstag der Anmeldung:
24.08.83 Patentblatt 83/34

(45) Bekanntmachung des Hinweises auf die Patenterteilung: 30.08.89 Patentblatt 89/35

(84) Benannte Vertragsstaaten:
CH DE FR GB IT LI NL

(56) Entgegenhaltungen:
CH–A– 321 854
DE–C– 648 160
DE–C– 849 886
DE–C– 944 065
US–A– 3 141 845

(73) Patentinhaber : Schafft, Helmut
Kellerweg 23
D-7074 Mögglingen (DE)

(72) Erfinder : Schafft, Helmut
Kellerweg 23
D-7074 Mögglingen (DE)

(74) Vertreter : Haft, Berngruber, Czybulka
Postfach 14 02 46 Hans-Sachs-Strasse 5
D-8000 München 5 (DE)

## Beschreibung

Die Erfindung bezieht sich auf eine Filtervorrichtung, insbesondere für Getränke.

Aus der DE-C-849 886 ist eine Filtervorrichtung bekannt, in der in einem Druckbehälter vertikal übereinander angeordnete Filterträger vorgesehen sind, zwischen denen eine Schicht eines im wesentlichen körnigen Filtermittels aufgenommen ist. Die Filterträger sind hierbei im wesentlichen formstabile Käfige, die die Filtermittel umschließen und Durchbrechungen aufweisen, die für die Trübe durchlässig, für die Filtermittel jedoch undurchlässig sind. Zwischen den einzelnen Filterträgern sind jeweils Federn nach Art von Tellerfedern vorgesehen. Die gesamte Anordnung aus übereinander gestapelten Filterträgern, Filtermitteln und Tellerfedern wird von einer Spannvorrichtung unter Preßdruck gehalten.

Durch den konstanten Preßdruck soll gewährleistet werden, daß die Filtermittel während des Filtervorgangs stabil in ihrer Lage gehalten werden. Der Flächendruck auf die Filtermittel ist jedoch durch die zwischengeschalteten Federn, die nur einen Teil der Filterträger beaufschlagen, sowie durch die Anordnung der gelochten Filterträger so labil, daß schon bei geringen Druckschwankungen Deformationen auftreten müssen, so daß eine Lagestabilisierung der Filtermittel während des Betriebes nicht gewährleistet ist.

Bei der bekannten Filtervorrichtung bilden die Filterträger nach unten offene Hohlkegel, wobei die zu filternde Trübe am äußeren Umfang der Filterträger in diese eintritt und das gereinigte Filtrat in einem zentralen Innenrohr abgeleitet wird. Abgesehen davon, daß durch die gewählte Durchströmungsrichtung die Innenwand des Druckbehälters mit der Trübe in Kontakt steht und damit eine Reinigung des Druckbehälters schwierig wird, wird durch die Form der Filterträger eine problemlose Entgasung des Druckbehälters und auch dessen vollständige Entleerung nach Abschluß des Filterprozesses problematisch.

Aus der CH-A-321 854 ist eine Filtervorrichtung bekannt, bei der die zu filtrierende Flüssigkeit mittels einer Pumpe durch auf plattenförmigen Filterträgern angeordnete Filter gefördert wird. Die Filterplatten sind hierbei während des Filtrierbetriebes mit einem gemeinsamen Mantel umhüllt. Die zu reinigende Flüssigkeit wird durch ein mittiges Rohr durch die Filter von innen nach außen geführt und dort in einem gemeinsamen Sammelkanal aufgefangen und aus dem Druckbehälter abgezogen. Zum Entfernen der Filtrierrückstände werden nach dem Ende des Filtriervorgangs der Mantel in Achsrichtung verschoben und die Filtrierrückstände durch schnelles Drehen der Filterträger herausgeschleudert.

Sie fliegen hierbei gegen einen nach unten offenen kegelförmigen Spritzmantel und fallen von diesem aus der Filtervorrichtung heraus. Eine annähernd vollständige Entfernung der Filtrierrückstände setzt insbesondere bei großen Filtervorrichtungen aufwendige Hubmechanismen und starke Motoren für die Drehung der Filterplatten voraus. Die gesamte Konstruktion ist daher aufwendig.

Der Erfindung liegt die Aufgabe zugrunde, eine Filtervorrichtung so auszugestalten, daß während des Betriebes ein konstanter Preßdruck auf die Filtermittel aufrechterhalten wird, so daß trotz Strömungs-, Druck- und Temperaturschwankungen des zu filtrierenden Mediums konstante Filtrationsergebnisse gewährleistet sind, und daß die Filtervorrichtung problemlos zu entgasen und zu entleeren ist.

Die Lösung dieser Aufgabe erfolgt gemäß der Erfindung durch die Merkmale des Patentanspruches 1.

Demnach liegen jeweils zwischen zwei als nach oben offene Hohlkegel ausgebildeten Filterträgern flächig durch diese Filterträger zusammengepreßte Filterpackungen, deren körniges Filtermaterial durch eine Hülle umschlossen ist, die für die Trübe durchlässig und für das Filtermittel undurchlässig ist. Die Trübe und das Filtrat werden über ein Kanalnetz zu- bzw. abgeführt, das an den den Filterpackungen zugewandten Oberflächen der Filterträger angeordnet ist und sich über die gesamte Oberfläche der Filterpackung erstreckt sowie gegenüber dieser durchgehend offen ist. Die Kanäle des Kanalnetzes kommunizieren einerseits mit einem zentralen Zuführkanal und andererseits im Bereich des Außenrandes der Filterträger in einer ringförmigen Sammelleitung, über die das Filtrat abgeführt wird.

Da die von einer filtermittelundurchlässigen Hülle umschlossene Filtermittelschicht eine zwischen den oben und unten anliegenden Filterträgern zusammengepreßte Filterpackung bildet, ist der Zusammenhalt des körnigen Filtermittels unter allen Betriebsbedingungen sichergestellt, so daß trotz des körnigen Aufbaues der Filterpackungen die Wirkung eines gesinterten Filtermittelkörpers erhalten wird, ohne allerdings dessen Nachteile in Kauf nehmen zu müssen, die vor allem in einer beschränkten Regenerierungsmöglichkeit zu sehen sind, weil die Feststoffe der zu filtrierenden Trübe durch die Poren des Sinterwerkstoffes eindringen und sich dort so stark festsetzen, daß sie sich auch bei noch so starker Rückspülung nicht wieder entfernen lassen. Wegen der Umhüllung des körnigen Filtermittels wird bei der Erfindung wirksam verhindert, daß größere Feststoffe durch die Hülle zum Filtermittel gelangen. Zum Filtermittel geschwemmte Feststoffe können wegen der Oberflächengestaltung des Filtermittels kaum eine Verankerung finden, so daß alle Feststoffe bei einer Rückspülung abgeschwemmt werden, was zu einer völligen Reinigung bzw. Regeneration führt, die beim Vorhandensein von organischen Stoffen durch ein Ablaugen mit einer alkalischen Lösung sichergestellt wird.

Auf Grund des durch die Druckbelastung der Filterpackungen gegebenen Zusammenhaltes der Filtermittelschichten bleiben die von der Geometrie der Filtermittelschichten abhängigen Filtereigenschaften für alle Betriebszustände unverändert, für die demnach auch gleiche Filtrationsergebnisse erhalten werden. Die Filtermittelpackungen aus einem körnigen Filtermittel, dessen Teilchen durch eine zumindest angenähert konstante Druckbelastung gegeneinander unverschiebbar festgehalten werden, machen selbstverständlich ein Anschwemmen des Filtermittels mit einer Flüssigkeit unnötig. Es kann folglich der die Filterpackungen zwischen den Filterträgern aufnehmende Druckbehälter durch die zu filtrierende Trübe selbst entgast werden, die in den Kanälen zwischen der Filterpackung und den Filterträgern der Filterpackung zugeführt wird, die Filterpackung durchsetzt und als Filtrat auf der anderen Seite der Filterpackung abgeführt wird, wobei auf Grund der Anordnung vertikal übereinander das im Druckbehälter befindliche Gas nach oben restlos verdrängt wird. Ein unerwünschtes Abführen von Filtrat mit der Anschwemmflüssigkeit entfällt daher mit allen damit im Zusammenhang stehenden Nachteilen.

Ist der jeweils untere Filterträger einer Filterpackung siebartig ausgebildet und am oberen, filtratundurchlässigen Filterträger der darunterliegenden Filterpackung unter Freilassung eines Trüberaumes druckfest abgestützt, so kann eine zweistufige Filtration mit einer Grob- und einer Feinklärung durchgeführt werden, weil der siebartig ausgebildete Filterträger für eine Grobabscheidung der Feststoffe sorgt, die im Trüberaum zwischen dem siebartigen Filterträger und dem darunterliegenden filtratundurchlässigen Filterträger verbleiben und bei einer Rückspülung ohne Schwierigkeiten aus diesem Trüberaum ausgetragen werden können. Die druckfeste Abstützung des siebartig ausgebildeten Filterträgers jeweils am oberen Filterträger der darunter befindlichen Filterpackung ist dabei wesentlich, um die Filterpackung zwischen den Filterträgern unter der notwendigen Druckspannung halten zu können.

Wird der siebartig ausgebildete Filterträger durch eine Lochplatte od. dgl. gebildet, so besteht die Gefahr, daß sich die abzuscheidenden groben Feststoffe in den Löchern des Filterträgers verklemmen, so daß ein Entfernen dieser Feststoffe mit Hilfe eines Spülvorganges nicht mehr möglich ist. Damit ein solches Verstopfen der siebartigen Filterträger mit Sicherheit ausgeschlossen werden kann, kann die Zulaufoberfläche dieser siebartigen Filterträger mit einem Filtertuch abgedeckt werden, das das Eindringen von gröberen Feststoffen in die Öffnungen der siebartigen Filterträger verhindert.

Üblicherweise werden die Filterträger auf einer vertikalen Zentralachse des Druckbehälters angeordnet. Diese bekannte Konstruktion erlaubt das Aufbringen der erforderlichen Druckspannungen auf die Filterpackungen in einer besonders einfachen Weise, wenn die axial verschiebbar auf der Zentralachse gelagerten Filterträger zwischen zwei Druckköpfen eingespannt werden, von denen einer verschiebefest mit der Zentralachse und der andere, verschiebbar geführte Druckkopf mit einem Spanntrieb verbunden ist. Über den Spanntrieb kann die gewünschte Druckbelastung eingestellt werden, die über die Druckköpfe auf die Filterträger und von diesen auf die Filterpackungen übertragen wird, wobei die Zentralachse als Zugstange wirkt.

Um Verschiebungen innerhalb einer Filterpackung und damit Änderungen hinsichtlich des geometrischen Aufbaues dieser Packung zu vermeiden, sollen die Preßdrücke unabhängig von sich ändernden Temperatur- und Druckverhältnissen zumindest angenähert konstant gehalten werden. Sind die aufgebrachten Preßdrücke im Vergleich zu den auftretenden Druckänderungen, beispielsweise auf Grund von Temperaturschwankungen, groß, so kann mit einer unveränderbaren Vorspannung der Filterpackungen das Auslangen gefunden werden. Ist der Einfluß solcher Druckänderungen jedoch nicht vernachlässigbar, so muß durch eine entsprechende Änderung der Vorspannung eine Druckschwankung im Bereich des Behälters ausgeglichen werden. Dies kann in sehr einfacher Weise dadurch erreicht werden, daß der Spanntrieb aus einem Arbeitszylinder besteht, der mit einem bestimmten Druck beaufschlagt ist. Unabhängig von sich ändernden Druckverhältnissen wird mit einem solchen Arbeitszylinder ein konstanter Preßdruck für die Filterpackungen sichergestellt, so daß Lageveränderungen und Umschichtungen innerhalb der Filterpackungen ausgeschlossen sind.

An Stelle eines Arbeitszylinders kann auch eine Spannfeder treten, da ja der Stellweg vernachlässigbar klein bleibt.

Um besonders günstige Verhältnisse für das Entgasen des Druckbehälters oder das vollständige Ablassen einer Flüssigkeit aus dem Druckbehälter zu schaffen, können in weiterer Ausbildung der Erfindung die Filterträger und die Filterpackungen nach oben offene Hohlkegeln bilden. Auf Grund des Auftriebes wird das im Druckbehälter befindliche Gas durch das zu klärende Medium nach oben verdrängt, ohne daß sich das zu verdrängende Gas in Toträumen sammeln kann. Umgekehrt kann bei einer Belüftung des Druckbehälters eine Flüssigkeit aus den Filterpackungen restlos nach unten abfließen. Bei Öffnungswinkeln der Hohlkegel zwischen 90° und 150° werden Bedingungen sichergestellt, die sowohl einer Verteilung der Trübe über die Filterpackungen als auch vorteilhaften Strömungsverhältnissen gerecht werden.

Selbstverständlich muß das Filtrat im Bereich des oberen Randes der nach oben offenen Hohlkegel abgeführt werden, wenn die Zuführung der Trübe in den Behälter die Entgasung des Druckbehälters unterstützen soll. In diesem Zusammenhang werden einfache Konstruktionsbedingungen geschaffen, wenn die Kanäle zwischen den Filterpackungen und den oben anliegenden Filterträgern zum Abführen des Filtrats jeweils in einer ringförmigen Sammelleitung im Bereich des Außenrandes des Filterträgers münden. Damit sich ein über die Oberfläche der Filterpackungen gleichmäßiges Strömungsbild für das abzuführende Filtrat ergibt, kann die ringförmige Sammelleitung an um den Umfang gleichmäßig verteilten, axial verlaufenden Abflußleitungen angeschlossen werden.

Sind die Kanäle zwischen den Filterpackungen und den unten anliegenden Filterträgern zumindest an einem Zuführkanal im Bereich der Spitze des Hohlkegels angeschlossen, so kann die zugeführte Flüssigkeit über diesen Zuführkanal auch wieder restlos abfließen. Die Trübe kann selbstverständlich auch im Bereich des Außenrandes des unten anliegenden Filterträgers in die Kanäle zwischen diesem Filterträger und der Filterpackung eingeführt werden, um eine bessere Verteilung der Strömung über die Filterpackung sicherzustellen.

Die Kanäle zwischen den Filterpackungen und den Filterträgern haben für eine gute Zuführung der Trübe zur Filterpackung über deren gesamten Bereich und für eine entsprechende Filtratabfuhr aus dem gesamten Filterpackungsbereich zu sorgen. Diesen Anforderungen kann in vorteilhafter Weise entsprochen werden, wenn die Kanäle zwischen den Filterpackungen und den Filterträgern durch einen Rippenraster auf den Oberflächen der Filterträger gebildet werden, weil sich durch solche Rippenraster mit einfachen Mitteln ein Kanalnetz ergibt, das sich über die gesamte Oberfläche der Filterpackungen erstreckt und gegenüber der Filterpackung durchgehend offen ist.

Da die Filterpackungen aus einem pulverförmigen bzw. körnigen Filtermittel besteht, das keine Formfestigkeit aufweist, muß das Filtermittel vor dem Einsetzen in den Druckbehälter in die gewünschte Form gebracht werden. Eine Möglichkeit hiefür besteht darin, daß das Filtermittel vor seiner Umhüllung durch ein lösliches, vorzugsweise wasserlösliches Bindemittel, zu einem Formkörper gebunden wird. Dieser Formkörper kann nicht nur einfach transportiert, sondern auch formgerecht in den Druckbehälter zwischen je zwei Filterträgern eingesetzt werden. Allerdings muß nach dem Aufbringen des zur Lagesicherung der Filterpackungen notwendigen Preßdruckes das Bindemittel wieder aus dem Filtermittel herausgelöst werden, was durch ein Spülen mit einem entsprechenden Lösungsmittel keinerlei Schwierigkeiten bereitet.

Eine andere Möglichkeit der formgerechten Einbringung der Filterpackungen in den Druckbehälter ist dadurch gekennzeichnet, daß das Filtermittel mit seiner Hülle auf einem formbeständigen Spannkegel aufgespannt wird, so daß die Spannkräfte den Formzusammenhalt der Filterpackung sicherstellen, wobei die Grundform durch den Spannkegel gegeben ist. Nach dem Einsetzen der auf dem Spannkegel aufgespannten Filterpackung in den Druckbehälter muß der Spannkegel entfernt werden, um an seine Stelle den entsprechend geformten Filterträger montieren zu können. Dazu sollen die Spannkräfte abgebaut und die vom vorher eingebrachten Filterträger gestützte Filterpackung entlastet werden, was dadurch erreicht werden kann, daß der Spannkegel hohl ausgebildet und zumindest angenähert entlang einer Mantelerzeugenden aufreißbar ist. Durch das Aufreißen des Mantels des hohlen Spannkegels kann dessen Durchmesser verringert und der Spannkegel ohne Krafteinwirkung auf die Filterpackung von dieser abgezogen werden.

In der Zeichnung ist der Erfindungsgegenstand schematisch dargestellt. Es zeigen

Fig. 1 eine erfindungsgemäße Filtervorrichtung in einem vereinfachten Vertikalschnitt,

Fig. 2 einen Querschnitt der Filterpackungen der Filtervorrichtung in einem größeren Maßstab,

Fig. 3 eine der Fig. 2 entsprechende Darstellungsart einer Konstruktionsvariante der Filterpackungen,

Fig. 4 eine von einem Spannkegel getragene Filterpackung im Schnitt und

Fig. 5 einen Schnitt nach der Linie V-V der Fig. 4.

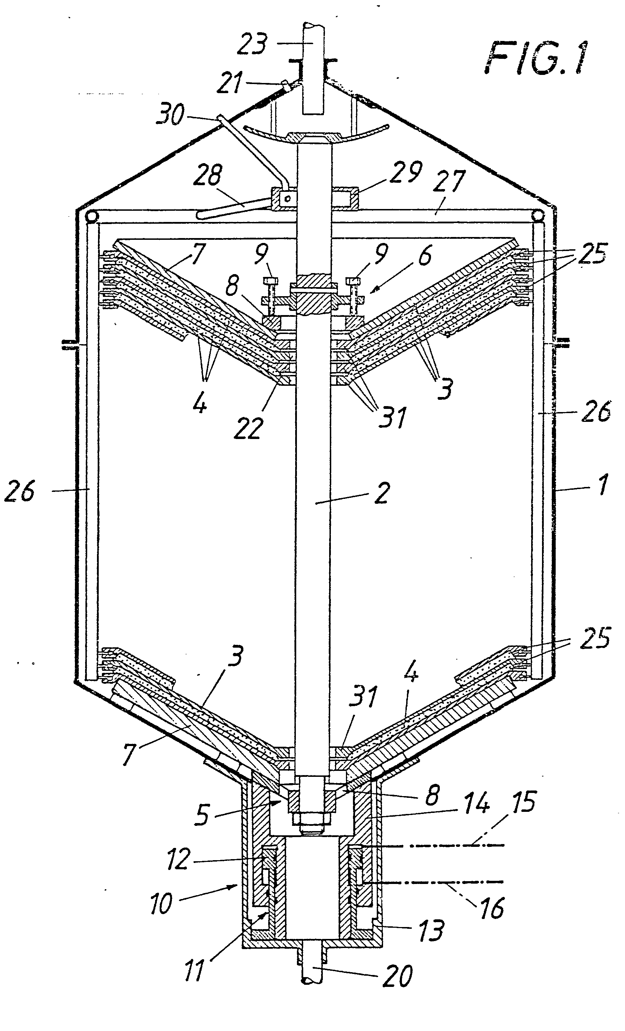

Wie der Fig. 1 zu entnehmen ist, besteht die dargestellte Filtervorrichtung im wesentlichen aus einem Druckbehälter 1, in dem eine vertikale Zentralachse 2 vorgesehen ist, auf der die zwischen Filterträgern 3 gehaltenen Filterpackungen 4 angeordnet und zwischen zwei Druckköpfen 5 und 6 unter eine Druckspannung gesetzt sind. Die beiden Druckköpfe 5 und 6 werden dabei jeweils von einem Druckübertragungskörper 7 in Form eines Hohlkegels und einem auf der Zentralachse 2 gelagerten Kopfstück 8 gebildet, an dem sich die Druckübertragungskörper 7 abstützen können. Während das Kopfstück 8 des Druckkopfes 5 auf der Zentralachse 2 anschlagbegrenzt verschiebbar ist, stützt sich das Kopfstück 8 des Druckkopfes 6 über Stellschrauben 9 an der Zentralachse 2 ab. Über die Stellschrauben 9 kann somit bei am Anschlag anliegendem Druckkopf 5 eine Vorspannung auf die Filterpackungen 4 zwischen den Filterträgern 3 aufgebracht werden.

Da jede Verschiebung von Filtermittelteilchen des körnigen Filtermittels innerhalb der Filterpackungen 4 vermieden werden soll, müssen die Filtermittelteilchen durch von außen aufgebrachte Kräfte zusammengehalten werden, wobei die sich ändernden Verhältnisse im Bereich der durch die Filterpackungen strömenden Medien zu keinen eine Verlagerung der Filtermittelteilchen ermöglichenden Druckunterschieden führen dürfen. Aus diesem Grunde wird jede ins Gewicht fallende Druckänderung durch eine entsprechende Änderung der auf die Filterpackung wirkenden Preßdrücke ausgeglichen. Zu diesem Zweck ist der Druckkopf 5 mit einem Spanntrieb 10 verbunden, der aus einem als Ringkolben-Zylinder ausgebildeten Arbeitszylinder 11 besteht. Die Anordnung ist dabei so getroffen, daß der Ringkolben 12 fest an einem am Druckbehälter 1 angeflanschten Gehäuse 13 abgestützt ist und der Zylinder 14 gegen den anschlagbegrenzt axial verschiebbar auf der Zentralachse 2 geführten Druckkopf 5 drückt, wenn der Arbeitszylinder 11 über die Druckmittelleitung 15 beaufschlagt wird. Über die Druckmittelleitung 16, die wie die Druckmittelleitung 15 abwechseln an eine Druckmittelquelle und an einen Druckmittel-Vorratsbehälter angeschlossen werden kann, kann der Arbeitszylinder 11 gegensinnig beaufschlagt werden, wobei allerdings eine Mindestvorspannung zwischen den Druckköpfen 5 und 6 erhalten bleibt, weil der Druckkopf 5 in diesem Fall am Anschlag anliegt.

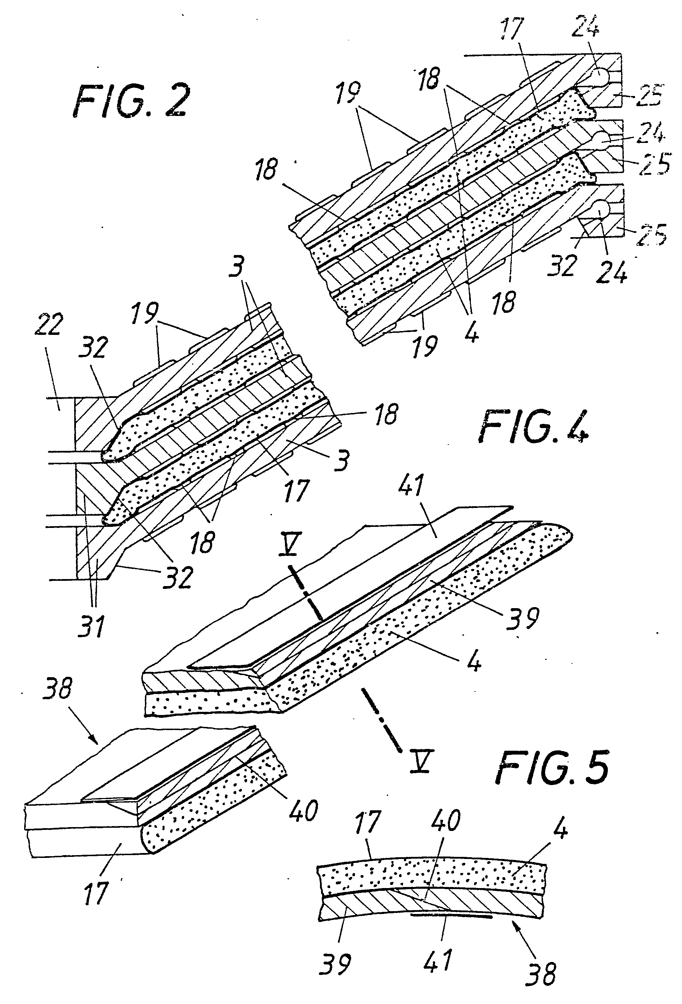

Wie der Fig. 2 entnommen werden kann, sind die Filterträger 3 in Form von sich an die Druckübertragungskörper 7 anschmiegenden, nach oben offenen Hohlkegeln ausgebildet, wobei mit Ausnahme der endseitigen Filterträger jedem Filterträger 3 eine obere und eine untere Filterpackung 4 zugeordnet ist, die zwischen den oben und unten anliegenden Filterträgern 3 in der beschriebenen Weise unter annähernd konstantem Druck zusammengepreßt werden. Die Filterpackungen 4 bestehen jeweils aus einer trübedurchlässigen, aber filtermittelundurchlässigen Hülle 17, die ein körniges Filtermittel, beispielsweise Kieselgur, umschließt. Die zu filtrierende Trübe muß die Filterpackungen 4 durchsetzen, was Kanäle 18 zwischen den eine Filtratsperrschicht bildenden Filterträgern 3 und den Filterpackungen 4 zum Zuführen der Trübe und zum Abführen des Filtrates bedingt. Diese Zu- und Abführkanäle 18 werden durch vorstehende Rippen 19 auf den Filterträgern 3 gebildet, wobei sich ein Rippenraster mit einem Kanalnetz ergibt, das für eine gute Verteilung der Trübe über die Oberfläche der Filterpackungen bzw. ein störungsfreies Abführen des Filtrates von der gesamten Oberfläche der Filterpackungen gewährleistet.

Die zu klärende Trübe wird am Beginn einer Filtration von unten über eine Leitung 20 durch den Arbeitszylinder 11 in den Druckbehälter 1 eingebracht, um eine Entgasung durch ein oberes Entgasungsventil 21 sicherzustellen. Da zwischen der Zentralachse 2 und den Filterträgern 3 ein ringförmiger Zuführkanal 22 frei bleibt, kann die Trübe von der Spitze der durch die Filterpackungen 4 bzw. der Filterträger 3 gebildeten Hohlkegel den Filterpackungen zuströmen, so daß bei einer Entgasung des Druckbehälters am Beginn einer Filtration das in den Filterpackungen befindliche Gas, beispielsweise Luft oder $CO_2$, nach oben verdrängt wird und den Druckbehälter über die zur Ableitung des Filtrates vorgesehenen Leitungen verläßt. Das Filtrat, das nach dem Auffüllen des Druckbehälters über eine obere Versorgungsleitung 23 zugeführt wird, wird nach dem Durchgang durch die Filterpackungen 4 in ringförmigen Sammelleitungen 24 im Bereich des unteren Außenrandes 25 der Filterträger 3 aufgenommen, die an axial verlaufende Abflußleitungen 26 angeschlossen sind. Diese Abflußleitungen 26 sind gleichmäßig um den Umfang der Filterträger 3 verteilt, um eine über die Filterpackungen entsprechende Strömungsverteilung zu erhalten, und an einen gemeinsamen, oberen Ringkanal 27 angeschlossen, der über eine aufwärtsführende Leitung 28 mit einem Sammelraum 29 für das Filtrat verbunden ist. Aus diesem Sammelraum 29 wird das Filtrat über eine Steigleitung 30 aus dem Behälter abgeführt, wobei durch die stets aufsteigenden Leitungskanäle sichergestellt wird, daß das nach oben verdrängte Gas sich in keinen Toträumen sammeln kann.

Umgekehrt bedingt diese Leitungsanordnung die Möglichkeit, den Druckbehälter 1 restlos zu entleeren, weil sich in der umgekehrten Strömungsrichtung stets abfallende Leitungskanäle ergeben. Über die durch den ringförmigen Arbeitszylinder führende Leitung 20 im Bodenbereich des Druckbehälters 1 ist bei einer entsprechenden Begasung eine vollständige Entleerung ohne besondere Maßnahmen durchführbar.

Wesentlich für die einwandfreie Funktion der dargestellten Filtervorrichtung ist, daß auf die Filterpackungen 4 über die Filterträger 3 ein ausreichender, zumindest annähernd konstanter Preßdruck ausgeübt werden kann, um Verlagerungen des Filtermittels innerhalb der Filterpackungen mit Sicherheit ausschließen zu können. Die Filterträger 3 müssen daher die über die Druckübertragungskörper 7 aufgebrachten Druckkräfte an die Filterpackungen übertragen können, was selbstverständlich nur möglich ist, wenn die oben und unten an einer Filterpackung 4 anliegenden Filterträger 3 nicht gegeneinander abgestützt sind, wie dies bekannt ist, um zwischen den Filterträgern flüssigkeitsdichte Aufnahmeräume für die Trübe zu erhalten. Aus diesem Grunde sind die Filterträger 3 auch mit einem axialen Abstand voneinander angeordnet. Um bei einer solchen Anordnung keinen nicht über eine Filterpackung 4 führenden Kurzschluß zwischen den Kanälen 18 zum Zuführen der Trübe und zum Abführen des Filtrats zu erhalten, sind die Außenränder 25 und die Innenränder 31 der Filterträger mit einer Schulter 32 versehen, an die die Filterpackung durch den Preßdruck dicht angepreßt wird, so daß sich im Bereich der Schulter keine Strömung zwischen dem Filterträger und der Filterpackung ergeben kann.

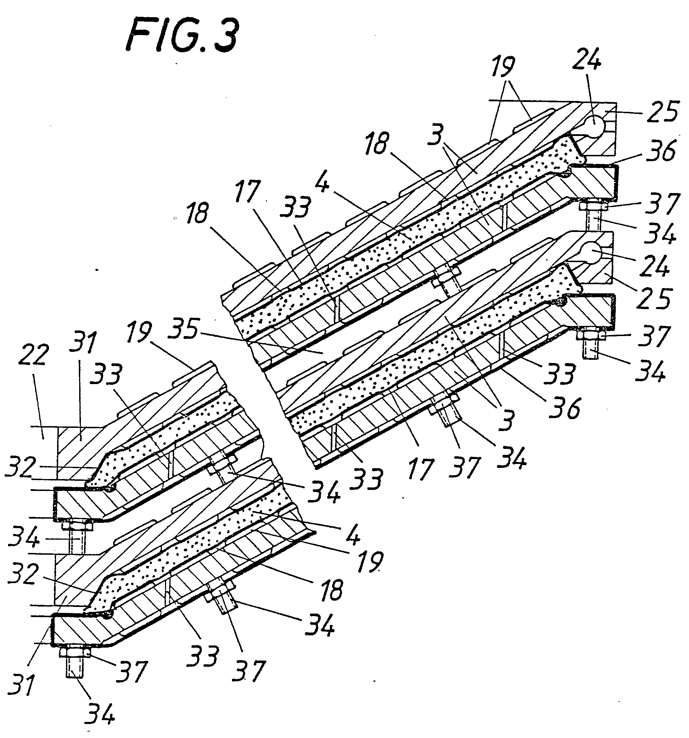

Gemäß Fig. 3 kann eine zweistufige Klärung vorgenommen werden, weil der jeweils untere Filterträger 3 einer Filterpackung 4 siebartig ausgebildet ist und Durchtrittslöcher 33 für das Filtrat aufweist. Diese siebartigen Filterträger 3 müssen selbstverständlich die erforderlichen Preßdrücke auf die Filterpackungen übertragen können, was eine druckfeste Abstützung am oberen, filtratundurchlässigen Filterträger der jeweils darunterliegenden Filterpackung notwendig macht. Diese druckfeste Abstützung wird über Druckbolzen 34 sichergestellt, die die einander zugekehrten Filterträger 3 benachbarter Filterpackungen 4 unter Bildung eines Trüberaumes 35 in einem Abstand voneinander halten. Das im Bereich der Innen- und Außenränder der Filterträger in den Trüberaum strömende, zu filtrierende Mittel tritt durch die Durchtrittslöcher 33 der jeweils oberen Filterträger zu den Filterpackungen 4 durch, wird in den Filterpackungen einer Feinklärung unterworfen und in der im Zusammenhang mit Fig. 2 beschriebenen Art und Weise als Filtrat abgeführt. Damit die Durchtrittslöcher 33 nicht durch sich festsetzende Grobstoffanteile verstopft werden können, ist die Zulaufoberfläche der siebartig ausgebildeten Filterträger 3 mit einem Filtertuch 36 abgedeckt, das mit Hilfe von auf den Druckbolzen 34 aufgeschraubten Klemmuttern 37 befestigt wird. Dieses Filtertuch hält den Grobanteil der Feststoffe der zu klärenden Trübe zurück, so daß die angestrebte Zweistufigkeit des Filtriervorganges gewährleistet ist.

Da auf Grund des körnigen Aufbaues des Filtermittels die Filterpackungen keine feste Raumform aufweisen, müssen die Filterpackungen vor dem Einsetzen in den Druckbehälter in die gewünschte Form gebracht werden. Zu diesem Zweck kann das Filtermittel mit einem löslichen Bindemittel zu einem Formkörper gebunden werden. Dies verlangt jedoch ein Herauslösen des Bindemittels aus den Filterpackungen vor der Inbetriebnahme der Filtervorrichtung. Eine andere Möglichkeit besteht gemäß den Fig. 4 und 5 darin, die Filterpackungen 4 auf einem Spannkegel 38 aufzuspannen, der die Form der Filterpackungen bestimmt. Die beim Aufspannen der Filterpackung auf den Außenmantel des Spannkegels auf die Filterpackung wirkenden Kräfte sichern den notwendigen Zusammenhalt und damit die Formbeständigkeit der Filterpackung. Nach dem Einsetzen dieser Filterpackungen in den Druckbehälter 1 muß jedoch der Spannkegel 38 entfernt werden, um Platz für einen Filterträger 3 zu machen. Zu diesem Zweck wird der Mantel 39 des Spannkegels 38 entlang einer Mantelerzeugenden aufgerissen, so daß der Kegeldurchmesser durch ein Übereinanderschieben der aufgerissenen Mantelränder verkleinert und der Spannkegel unbehindert von der Filterpackung gelöst werden kann. Damit das Aufreißen einfach durchgeführt werden kann, ist der Mantel 39 entlang einer Erzeugenden aufgeschnitten und die Stoßstelle 40 der Mantelränder mit einer Abreißfolie 41 abgedeckt. Nach dem Lösen der Abreißfolie 41 kann somit die gewünschte Durchmesserverringerung des Spannkegels problemlos durchgeführt werden, zumal die Stoßstelle 40 zwischen den Mantelrändern schräg verläuft.

Mit der dargestellten Filtervorrichtung wird ein Kesselfilter erhalten, das nicht nur zur Grob-, und Feinklärung bzw. zur Entkeimung von Flüssigkeiten vorteilhaft geeignet ist, sondern auch zur Filtration von Gasen eingesetzt werden kann. Besonders günstige Verhältnisse werden bei der Entkeimung von Getränken, beispielsweise Bier, Wein, Süßmost, Mineralwasser oder Trinkwasser erzielt, wobei besonders hervorzuheben ist, daß die Filtermittelpackungen nach einer Reinigung und Regenerierung wiederholt verwendet werden können und bis zu ihrer völligen Erschöpfung im Druckbehälter verbleiben. Durch den besonderen Aufbau bleiben die Filtrationsergebnisse auch bei unterschiedlichen Fließgeschwindigkeiten und unterschiedlichen Temperaturen konstant, so daß außerordentlich lange Standzeiten gewährleistet werden können.

## Patentansprüche

1. Filtervorrichtung, insbesondere für Getränke, mit folgenden Merkmalen :

einem Druckbehälter (1) ;

vertikal übereinander angeordneten Filterträgern (3), die nach oben offene Hohlkegel bilden ;

zusammenpreßbare Filterpackungen (4), die ebenfalls nach oben offene Hohlkegel bilden und jeweils zwischen zwei Filterträgern (3) eingelegt sind und über die oben und unten anliegenden Filterträger (3) unter annähernd konstantem Preßdruck gehalten sind ;

jede Filterpackung (4) weist eine Schicht eines zumindest im wesentlichen körnigen Filtermittels und eine die Schicht umschließende Hülle (17) auf, die für die Trübe durchlässig und für das Filtermaterial undurchlässig ist ;

die den Filterpackungen (4) zugewandten Oberflächen der Filterträger (3) weisen jeweils ein Kanalnetz (18) auf, das sich über die gesamte Oberfläche der Filterpackung (4) erstreckt und gegenüber dieser durchgehend offen ist ;

die Kanäle des Kanalnetzes (18) des oben an einer Filterpackung (4) anliegenden Filterträgers (3) münden zum Abführen des Filtrats in einer ringförmigen Sammelleitung (24) im Bereich des Außenrandes des Filterträgers (3) ;

die Kanäle des Kanalnetzes (18) des unten an einer Filterpackung (4) anliegenden Filterträgers (3) sind an zumindest einem Zuführkanal (22) im Bereich der Spitze der Hohlkegel angeschlossen.

2. Filtervorrichtung nach Anspruch 1, dadurch gekennzeichnet, daß das Kanalnetz (18) der Filterträger (3) durch ein Rippenraster in der jeweils der Filterpackung (4) zugewandten Oberfläche der Filterträger (3) gebildet ist.

3. Filtervorrichtung nach Anspruch 1 oder 2, dadurch gekennzeichnet, daß der Öffnungswinkel der Hohlkegel 90° bis 150° beträgt.

4. Filtervorrichtung nach einem der vorhergehenden Ansprüche, dadurch gekennzeichnet, daß der jeweils unten an einer Filterpackung (4) anliegende Filterträger (3) siebartig ausgebildet und am oberen Filterträger (3) der darunterliegenden Filterpackung (4) unter Freilassung eines Trüberaumes (35) abgestützt ist.

5. Filtervorrichtung nach Anspruch 4, dadurch gekennzeichnet, daß die dem Trüberaum (35) zugewandte Oberfläche des siebartig ausgebildeten Filterträgers (3) mit einem Filtertuch (36) abgedeckt ist.

6. Filtervorrichtung nach Anspruch 1, dadurch gekennzeichnet, daß die ringförmigen Sammelleitungen (24) an um den Umfang gleichmäßig verteilten, axial verlaufenden Abflußleitungen (26) angeschlossen sind.

7. Filtervorrichtung nach einem der Ansprüche 1 bis 6, dadurch gekennzeichnet, daß die Filterträger (3) auf einer vertikalen Zentralachse (2) in dem Druckbehälter (1) axial verschiebbar und zwischen zwei Druckköpfen (5, 6) einspannbar sind, von denen einer verschiebefest mit der Zentralachse (2) und der andere verschiebbar geführte Druckkopf (5) mit einem Spanntrieb (10) verbunden ist.

8. Filtervorrichtung nach Anspruch 7, dadurch gekennzeichnet, daß der Spanntrieb (10) aus einem Arbeitszylinder (11) besteht.

9. Filtervorrichtung nach Anspruch 7, dadurch gekennzeichnet, daß der Spanntrieb (10) aus einer Spannfeder besteht.

10. Filtervorrichtung nach Anspruch 1, dadurch gekennzeichnet, daß das Filtermittel jeder Filterpackung (4) vor seiner Umhüllung durch die Hülle (17) durch ein lösliches, vorzugsweise wasserlösliches Bindemittel zu einem Formkörper gebunden ist.

11. Filtervorrichtung nach Anspruch 1, dadurch gekennzeichnet, daß die Filterpackung (4) zum Einsetzen in den Druckbehälter (1) auf einen Spannkegel (38) aufspannbar ist.

12. Filtervorrichtung nach Anspruch 11, dadurch gekennzeichnet, daß der Spannkegel (38) hohl ausgebildet und zumindest angenähert entlang einer Mantelerzeugenden aufreißbar ist.

## Claims

1. Filtration apparatus, especially for beverages, with the following features :
a pressure vessel (1) ;
filter carriers (3) which are arranged vertically one above another and form hollow cones that open upwards ;
compressible filter packs (4) which likewise form hollow cones that open upwards, which are in each case inserted between two filter carriers (3), and which are held under an approximately constant inward pressure that is applied via the filter carriers (3) that bear against their upper and lower surfaces ;
each filter pack (4) comprises a layer of a filter material that is at least substantially granular, and an envelope (17) which encases said layer, which is permeable to the medium to be filtered but through which the filter material cannot pass ;
those surfaces of the filter carriers (3) which face the filter packs (4) in each case exhibit a channel network (18) which extends across the entire surface of the filter pack (4) and is continuously open towards this surface ;
the channels of the channel network (18) of the filter carrier (3) which bears against the upper surface of a filter pack (4) open into an annular collecting line (24) in the vicinity of the outer rim of the filter carrier (3), so as to discharge the filtrate ;
the channels of the channel network (18) of the filter carrier (3) which bears against the lower surface of a filter pack (4) are connected to one or more feed passages (22) in the vicinity of the points of the hollow cones.

2. Filtration apparatus according to Claim 1, characterized in that the channel networks (18) of the filter carriers (3) are formed by a grid of ribs in the filter carrier surfaces which in each case face the filter pack (4).

3. Filtration apparatus according to Claim 1 or 2, characterized in that the hollow cones have a point angle of 90 to 150 degrees.

4. Filtration apparatus according to any one of the preceding Claims, characterized in that the filter carrier (3) which in each case bears against the lower surface of a filter pack (4) is configured as a filter screen and is supported on the upper filter carrier (3) associated with the next filter pack (4) below, while at the same time leaving a space (35) for the medium to be filtered.

5. Filtration apparatus according to Claim 4, characterized in that one of the surfaces of the filter carrier (3) which is configured as a filter screen is covered by a filter cloth (36), the surface thus covered being the one that faces the space (35) for the medium to be filtered.

6. Filtration apparatus according to Claim 1, characterized in that the annular collecting lines (24) are connected to discharge lines (26) which run axially and are uniformly distributed around the periphery.

7. Filtration apparatus according to any one of Claims 1 to 6, characterized in that the filter carriers (3) are axially displaceable by sliding on a vertical central shaft (2) inside the pressure vessel (1), and are clampable between two pressure heads (5, 6), one of these pressure heads being immovably connected to the central shaft (2), while the other pressure head (5), which is mounted in a manner such that it is displaceable by sliding, is connected to a device (10) that generates the clamping pressure.

8. Filtration apparatus according to Claim 7, characterized in that the device (10) that generates the clamping pressure consists of an operating cylinder (11).

9. Filtration apparatus according to Claim 7, characterized in that the device (10) that generates the clamping pressure consists of a clamping spring.

10. Filtration apparatus according to Claim 1, characterized in that before being encased by the envelope (17), the filter material for each filter pack (4) is bound in order to form a moulded body, binding being effected by means of a soluble binder, and preferably by one that is water-soluble.

11. Filtration apparatus according to Claim 1, characterized in that the filter pack (4) can be stretched tautly over a stretching cone (38), so as to enable it to be inserted into the pressure vessel (1).

12. Filtration apparatus according to Claim 11, characterized in that the stretching cone (38) is of hollow form and can be torn apart along a line which corresponds at least approximately to a generatrix of its curved surface.

## Revendications

1. Dispositif de filtration, spécialement pour boissons, avec les caractéristiques suivantes ;

un récipient sous pression (1) ;

des porte-filtres (3) disposés verticalement les uns au-dessus des autres, qui forment des cônes creux ouverts vers le haut ;

des garnitures filtrantes compressibles (4), qui forment également des cônes creux ouverts vers le haut, et sont insérées chacune entre deux porte-filtres (3) et sont maintenues sous une pression de compression approximativement constante par les porte-filtres (3) appliqués au-dessus et en dessous d'elles ;

chaque garniture filtrante (4) présente une couche d'un agent filtrant au moins pour l'essentiel granuleux, et une enveloppe (17) entourant la couche, enveloppe qui est perméable au liquide trouble et imperméable au matériau filtrant ;

les surfaces des porte-filtres (3) qui sont tournées vers les garnitures filtrantes (4) présentent chacune un réseau de canaux (18), qui s'étend sur toute la surface de la garniture filtrante (4), et qui est ouvert de manière ininterrompue vis-à-vis de cette dernière ;

les canaux du réseau (18) du porte-filtre (3) appliqué au-dessus d'une garniture filtrante (4) débouchent, pour évacuer le filtrat, dans une conduite collectrice annulaire (24) dans la région du bord extérieur du porte-filtre (3) ;

les canaux du réseau (18) du porte-filtre (3) appliqué en dessous d'une garniture filtrante (4) sont reliés à au moins un canal d'alimentation (22) dans la région du sommet du cône creux.

2. Dispositif de filtration selon la revendication 1, caractérisé en ce que le réseau de canaux (18) des porte-filtres (3) est formé par un réseau de nervures dans la surface des porte-filtres (3) qui est tournée vers la garniture filtrante (4) correspondante.

3. Dispositif de filtration selon la revendication 1 ou 2, caractérisé en ce que l'angle d'ouverture des cônes creux est compris entre 90° et 150°.

4. Dispositif de filtration selon l'une des revendications précédentes, caractérisé en ce que le porte-filtre (3) qui se trouve en dessous de chaque garniture filtrante (4) est conformé en tamis, et est appuyé contre le porte-filtre supérieur (3) de la garniture filtrante (4) qui se trouve en dessous, en laissant un espace libre (35) pour le liquide trouble.

5. Dispositif de filtration selon la revendication 4, caractérisé en ce que la surface du porte-filtre (3) conformée en tamis qui est tournée vers l'espace (35) pour le liquide trouble, est recouverte d'un tissu filtrant (36).

6. Dispositif de filtration selon la revendication 1, caractérisé en ce que les conduites collectrices annulaires (24) sont reliées à des conduites d'évacuation (26) s'étendant axialement et régulièrement réparties sur la périphérie.

7. Dispositif de filtration selon l'une des revendications 1 à 6, caractérisé en ce que les porte-filtres (3) sont montés coulissants axialement sur un axe central vertical (2) dans le récipient sous pression (1) et peuvent être serrés sur cet axe entre deux têtes de pression (5, 6), dont l'une est assemblée sans possibilité de coulissement à l'axe central (2), et dont l'autre (5), guidée avec possibilité de coulissement, est liée à un mécanisme de serrage (10).

8. Dispositif de filtration selon la revendication 7, caractérisé en ce que le mécanisme de serrage (10) est constitué par un vérin (11).

9. Dispositif de filtration selon la revendication 7, caractérisé en ce que le mécanisme de serrage (10) est constitué par un ressort de serrage.

10. Dispositif de filtration selon la revendication 1, caractérisé en ce que l'agent filtrant de chaque garniture filtrante (4) est, avant son enrobage par l'enveloppe (17), lié en un corps façonné par un agent liant soluble, de préférence soluble dans l'eau.

11. Dispositif de filtration selon la revendication 1, caractérisé en ce que la garniture filtrante (4) peut, en vue de son insertion dans le récipient sous pression (1), être serrée sur un cône de serrage (38).

12. Dispositif de filtration selon la revendication 11, caractérisé en ce que le cône de serrage (38) est conformé creux, et peut être ouvert par déchirement au moins approximativement le long d'une génératrice.

FIG.1

FIG. 2

FIG.4

FIG.5

# FIG.3